# EUROPEAN PATENT SPECIFICATION

(11) **EP 4 531 465 B1**
(45) Date of publication and mention of the grant of the patent: **09.12.2026**
(21) Application number: 25158007.2
(22) Date of filing: 24.12.2021
(51) Int. Cl.: H04W 4/06, H04W 76/10, H04W 48/16

(54) **COMMUNICATION CONTROL METHOD AND USER EQUIPMENT**
KOMMUNIKATIONSSTEUERUNGSVERFAHREN UND BENUTZERGERÄT
PROCÉDÉ DE COMMANDE DE COMMUNICATION ET ÉQUIPEMENT UTILISATEUR

(30) Priority: 06.01.2021 US 202163134280 P
(43) Date of publication of application: 02.04.2025
(62) Document number(s) of the earlier application(s) in accordance with Art. 76 EPC: 21917709.4 / 4 258 705
(73) Proprietor: Kyocera Corporation, Kyoto-shi, Kyoto 612-8501 (JP)
(72) Inventor: FUJISHIRO, Masato, Kyoto-shi, Kyoto, 612-8501 (JP); CHANG, Henry, San Diego, 92123 (US)
(74) Representative: Viering, Jentschura & Partner mbB Patent- und Rechtsanwälte

(56) References cited:
- US-A1- 2016 212 595
- VIVO: "Discussion on idle and inactive mode UEs", vol. RAN WG2, no. electronic; 20200817 - 20200828, 7 August 2020 (2020-08-07), XP051911885, Retrieved from the Internet <URL:https://ftp.3gpp.org/tsg_ran/WG2_RL2/TSGR2_111-e/Docs/R2-2007037.zip R2-2007037_Discussion on idle and inactive mode UEs.docx> [retrieved on 20200807]

## Description

### TECHNICAL FIELD

The present disclosure relates to a communication control method, a chip set, a user equipment, a program, and a system.

### BACKGROUND OF INVENTION

In recent years, a mobile communication system of the fifth generation (5G) has attracted attention. New Radio (NR), which is a Radio Access Technology (RAT) of the 5G System, has features such as high speed, large capacity, high reliability, and low latency compared to Long Term Evolution (LTE), which is a fourth-generation radio access technology.

US 2016/212595 A1 discloses a user terminal which includes: a receiver that receives a logged measurement configuration transmitted from a network by unicast signal, the logged measurement configuration configuring a Multicast-Broadcast Single-Frequency Network (MBSFN) measurement for MBSFN reference signal transmitted from the network; a controller including a processor configured to perform the MBSFN measurement according to the logged measurement configuration by logged Minimization of Drive Test (MDT) while the user terminal is in a Radio Resource Control (RRC) connected mode; and a transmitter that transmits an MBSFN measurement log obtained by the MBSFN measurement to the network.

R2-2007037 discusses how UEs in RRC_CONNECTED obtain MBS configurations via dedicated RRC signaling and proposes that the RRC Release message can carry MBS configurations for RRC_INACTIVE UEs, allowing service continuity. It emphasizes maintaining commonality between RRC_CONNECTED and RRC_INACTIVE states for multicast reception without reconfiguration.

### CITATION LIST

### NON-PATENT LITERATURE

Non-Patent Document 1: 3GPP Technical Specification "3GPP TS 38.300 V16.3.0 (2020-09)"
Moreover, 3GPP TSG-RAN WG2 Meeting #111 (electronic E-Meeting 17th Aug.-28th Aug. 2020) is concerned with a discussion on idle and inactive mode UEs.

### SUMMARY

The present invention provides a communication control method according to claim 1, a chipset according to claim 2, a user equipment according to claim 3, a program according to claim 4, and a system according to claim 5.

### BRIEF DESCRIPTION OF THE DRAWINGS

FIG. 1 is a diagram illustrating a configuration of a mobile communication system according to an embodiment.
FIG. 2 is a diagram illustrating a configuration of a user equipment (UE) according to an embodiment.
FIG. 3 is a diagram illustrating a configuration of a base station (gNB) according to an embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram illustrating an overview of MBS traffic delivery according to an embodiment.
FIG. 7 is a diagram illustrating delivery modes according to an embodiment.
FIG. 8 is a diagram illustrating a split MBS bearer according to an embodiment.
FIG. 9 is a diagram illustrating a configuration example of an RRC Reconfiguration message used for MBS reception configuration in Delivery mode 1.
FIG. 10 is a diagram illustrating an operation according to an embodiment.
FIG. 11 is a diagram illustrating an operation according to a first variation of an embodiment.
FIG. 12 is a diagram illustrating an operation according to a second variation of an embodiment.
FIG. 13 is a diagram illustrating an operation according to a third variation of an embodiment.
FIG. 14 is a diagram illustrating an operation according to a fourth variation of an embodiment.
FIG. 15 is a diagram illustrating an operation according to a fifth variation of an embodiment.
FIG. 16 is a diagram illustrating an operation according to a sixth variation of an embodiment.
FIG. 17 is a diagram illustrating an example of a structure of a Delivery mode 1 configuration.
FIG. 18 is a diagram illustrating a two-stage configuration in LTE SC-PTM.
FIG. 19 is a diagram illustrating an example of a scheme of Delivery mode 2.

### DESCRIPTION OF EMBODIMENTS

Introduction of multicast broadcast services to the 5G system (NR) has been under study. NR multicast broadcast services are desired to provide enhanced services compared to LTE multicast broadcast services.

The present disclosure provides an improved multicast broadcast service.

A mobile communication system according to an embodiment is described with reference to the drawings. In the description of the drawings, the same or similar parts are denoted by the same or similar reference signs.

### Configuration of Mobile Communication System

First, a configuration of a mobile communication system according to an embodiment is described.

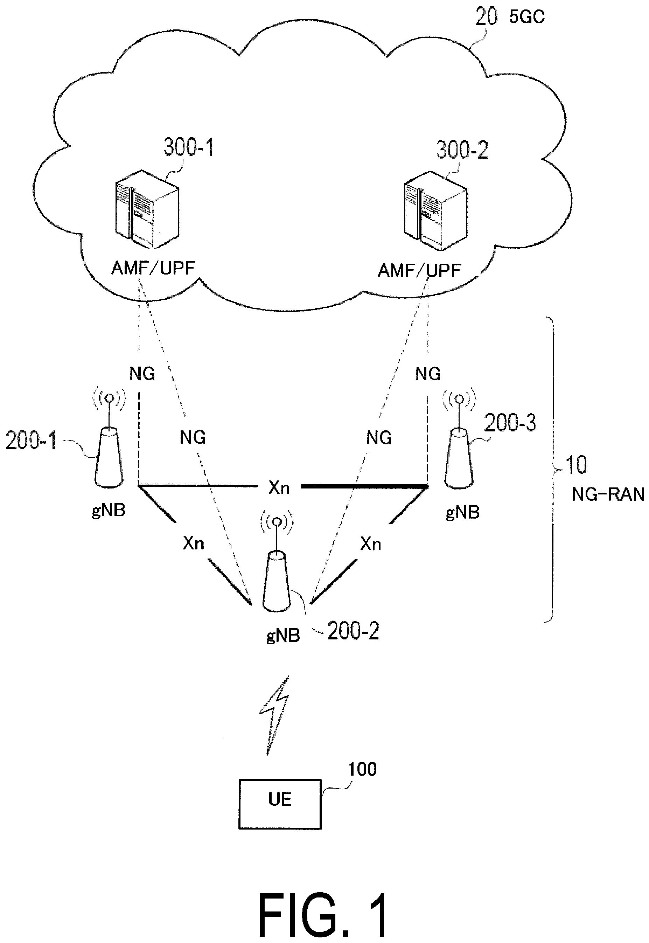

FIG. 1 is a diagram illustrating a configuration of the mobile communication system according to an embodiment. This mobile communication system complies with the 5th Generation System (5GS) of the 3GPP standard. The description below takes the 5GS as an example, but the Long Term Evolution (LTE) system and/or the 6th generation (6G) system may be at least partially applied to the mobile communication system.

As illustrated in FIG. 1, the mobile communication system includes a User Equipment (UE) 100, a 5G radio access network (Next Generation Radio Access Network (NG-RAN)) 10, and a 5G Core Network (5GC) 20.

The UE 100 is a mobile wireless communication apparatus. The UE 100 may be any apparatus as long as the UE 100 is used by a user. Examples of the UE 100 include a mobile phone terminal (including a smartphone), a tablet terminal, a notebook PC, a communication module (including a communication card or a chipset), a sensor or an apparatus provided on a sensor, a vehicle or an apparatus provided on a vehicle (Vehicle UE), and/or a flying object or an apparatus provided on a flying object (Aerial UE).

The NG-RAN 10 includes base stations (referred to as "gNBs" in the 5G system) 200. The gNBs 200 are interconnected via an Xn interface which is an inter-base station interface. Each gNB 200 manages one or a plurality of cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and/or the like. The "cell" is used as a term representing a minimum unit of a wireless communication area. The "cell" is also used as a term representing a function or a resource for performing wireless communication with the UE 100. One cell belongs to one carrier frequency.

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

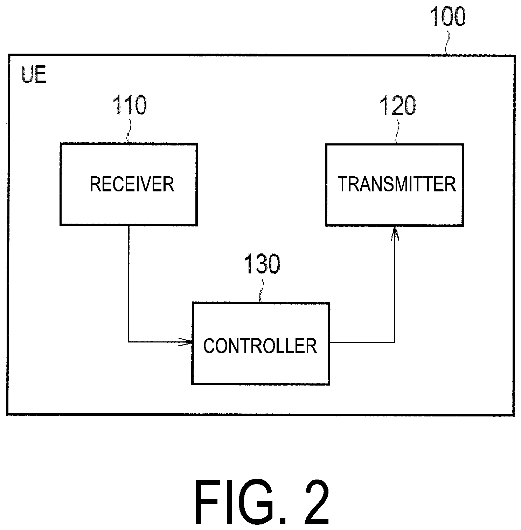

FIG. 2 is a diagram illustrating a configuration of the user equipment (UE) 100 according to an embodiment.

As illustrated in FIG. 2, the UE 100 includes a receiver 110, a transmitter 120, and a controller 130.

The receiver 110 performs various types of reception under control of the controller 130. The receiver 110 includes an antenna and a reception device. The reception device converts a radio signal received through the antenna into a baseband signal (a reception signal) and outputs the resulting signal to the controller 130.

The transmitter 120 performs various types of transmission under control of the controller 130. The transmitter 120 includes an antenna and a transmission device. The transmission device converts a baseband signal output by the controller 130 (a transmission signal) into a radio signal and transmits the resulting signal through the antenna.

The controller 130 performs various types of control in the UE 100. The controller 130 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

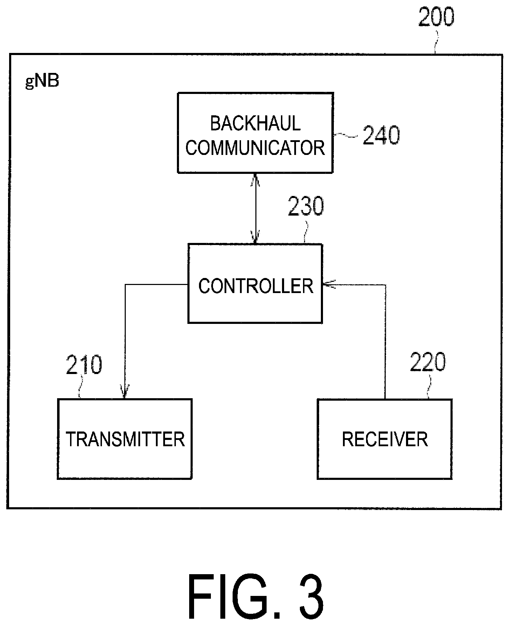

FIG. 3 is a diagram illustrating a configuration of the gNB 200 (base station) according to an embodiment.

As illustrated in FIG. 3, the gNB 200 includes a transmitter 210, a receiver 220, a controller 230, and a backhaul communicator 240.

The transmitter 210 performs various types of transmission under control of the controller 230. The transmitter 210 includes an antenna and a transmission device. The transmission device converts a baseband signal output by the controller 230 (a transmission signal) into a radio signal and transmits the resulting signal through the antenna.

The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

The controller 230 performs various types of controls for the gNB 200. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via the inter-base station interface. The backhaul communicator 240 is connected to the AMF/UPF 300 via the interface between a base station and the core network. Note that the gNB may include a Central Unit (CU) and a Distributed Unit (DU) (i.e., functions are divided), and both units may be connected via an F1 interface.

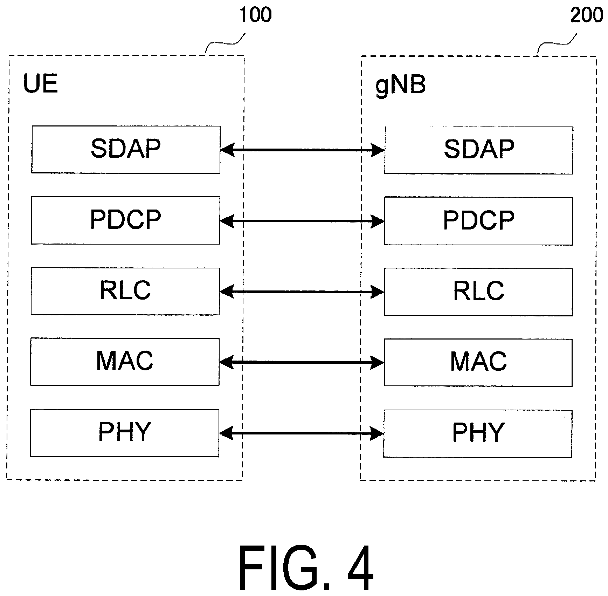

FIG. 4 is a diagram illustrating a configuration of a protocol stack of a radio interface of a user plane handling data.

As illustrated in FIG. 4, a radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel.

The MAC layer performs priority control of data, retransmission processing through hybrid ARQ (HARQ: Hybrid Automatic Rrepeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler determines transport formats (transport block sizes, modulation and coding schemes (MCSs)) in the uplink and the downlink, and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression and decompression, and encryption and decryption.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

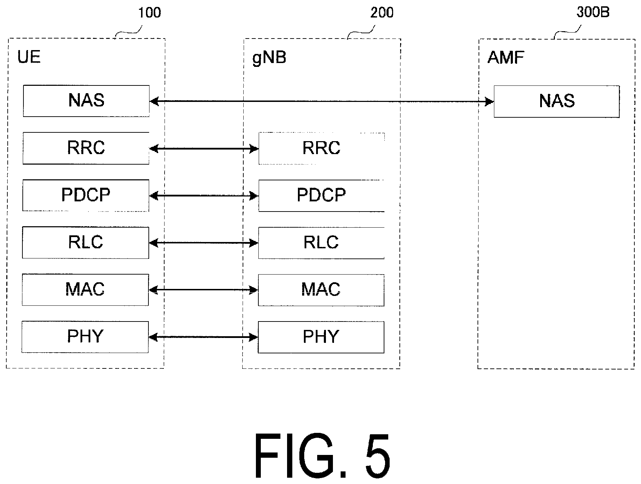

FIG. 5 is a diagram illustrating a configuration of a protocol stack of a radio interface of a control plane handling signaling (a control signal).

As illustrated in FIG. 5, the protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, reestablishment, and release of a radio bearer. When a connection between the RRC of the UE 100 and the RRC of the gNB 200 (RRC connection) exists, the UE 100 is in an RRC connected state. When a connection between the RRC of the UE 100 and the RRC of the gNB 200 (RRC connection) does not exist, the UE 100 is in an RRC idle state. When the connection between the RRC of the UE 100 and the RRC of the gNB 200 is suspended, the UE 100 is in an RRC inactive state.

The NAS layer which is positioned higher than the RRC layer performs session management, mobility management, and the like. NAS signaling is transmitted between the NAS layer of the UE 100 and the NAS layer of an AMF 300B.

Note that the UE 100 includes an application layer other than the protocol of the radio interface.

### MBS

An MBS according to an embodiment is described.

The MBS is a service in which the NG-RAN 10 can provide broadcast or multicast, i.e., Point To Multipoint (PTM) data transmission to the UE 100. Note that assumed use cases (service types) of the MBS include public safety communication, mission critical communication, Vehicle to Everything (V2X) communication, IPv4 or IPv6 multicast delivery, IPTV, group communication, and software delivery.

A broadcast service provides a service to every UE 100 within a particular service area for an application not requiring highly reliable QoS. A multicast service provides a service not to every UE 100, but to a group of UEs 100 participating in the multicast service. The multicast service makes it possible to provide the same content to the group of UEs 100 through a method with a higher radio efficiency than the broadcast service.

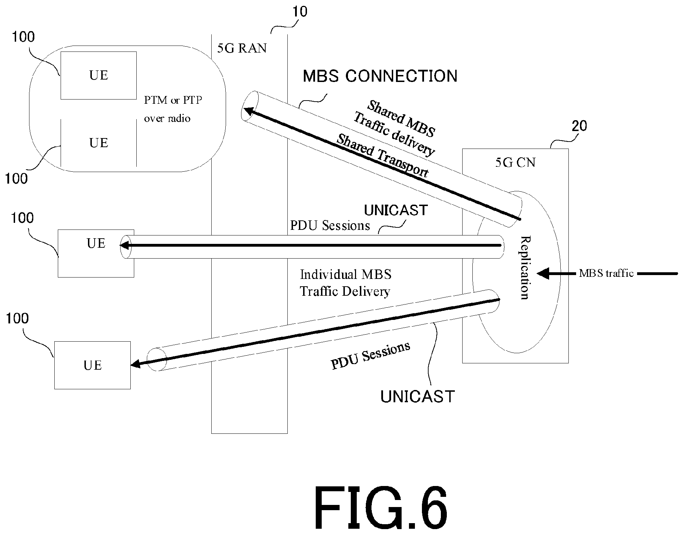

FIG. 6 is a diagram illustrating an overview of MBS traffic delivery according to an embodiment.

As illustrated in FIG. 6, MBS traffic is delivered from a single data source (application service provider) to a plurality of UEs. The 5G CN (5GC) 20, which is a 5G core network, receives the MBS traffic from the application service provider and performs Replication of the MBS traffic to deliver the replicated MBS traffic.

From the perspective of the 5GC 20, two multicast delivery methods are possible: 5GC Shared MBS Traffic delivery and 5GC Individual MBS Traffic delivery.

In the 5GC individual MBS traffic delivery method, the 5GC 20 receives a single copy of MBS data packets and delivers individual copies of these MBS data packets to the individual UEs 100 via Protocol Data Unit (PDU) sessions of the individual UEs 100. Thus, one PDU session for each UE 100 needs to be associated with a multicast session.

In the 5GC shared MBS traffic delivery method, the 5GC 20 first receives a single copy of MBS data packets and delivers the single copy of the MBS packets packets to a RAN node (i.e., gNB 200). Second, the gNB 200 delivers the single copy to one or more of the UEs 100.

From the perspective of the RAN (5G RAN) 10, two delivery methods are possible for radio transmission of the MBS traffic in the 5GC shared MBS traffic delivery method: a Point-to-Point (PTP) delivery method and a Point-to-Multipoint (PTM) delivery method.

In the PTP delivery method, the gNB 200 wirelessly delivers the individual copies of the MBS data packets to the individual UEs 100. On the other hand, in the PTM delivery method, the gNB 200 wirelessly delivers the single copy of the MBS data packets to a group of the UEs 100. The gNB 200 dynamically determines whether to use the PTM or PTP delivery method as a method for delivering the MBS traffic to one UE 100.

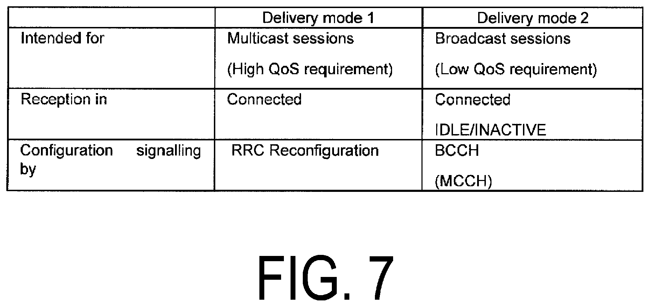

The PTP and PTM delivery methods are mainly related to the user plane. Modes for controlling the MBS traffic delivery include two delivery modes: Delivery mode 1 and Delivery mode 2. FIG. 7 is a diagram illustrating delivery modes according to an embodiment.

As illustrated in FIG. 7, Delivery mode 1 is a delivery mode that can be used by the UE 100 in the RRC connected state and is a delivery mode for high QoS requirements. Delivery mode 1 is used only for multicast sessions among MBS sessions. In an embodiment, Delivery mode 1 is assumed to be used for multicast sessions, but Delivery mode 1 may also be used for broadcast sessions. Delivery mode 1 may be available for the UE 100 in the RRC idle state or the RRC inactive state.

In an embodiment, the MBS reception configuration in Delivery mode 1 is performed through an RRC Reconfiguration message (or an RRC Release message), which is an RRC message unicast from the gNB 200 to the UE 100. The MBS reception configuration includes scheduling information of an MBS traffic channel carrying MBS traffic. Note that the MBS traffic channel, which is a type of logical channel, may be referred to as a Multicast Traffic Channel (MTCH). The MBS traffic channel is mapped to a Downlink Shared Channel (DL-SCH) being a type of transport channel.

Delivery mode 2 is a delivery mode that can be used not only by the UE 100 in the RRC connected state, but also by the UE 100 in the RRC idle state or the RRC inactive state, and is a delivery mode for low QoS requirements. Delivery mode 2 is used for broadcast sessions among MBS sessions. However, Delivery mode 2 may also be applicable to multicast sessions.

The MBS reception configuration in Delivery mode 2 is performed through a logical channel broadcast from the gNB 200 to the UEs 100, such as, a Broadcast Control Channel (BCCH) or a Multicast Control Channel (MCCH). Hereinafter, such a control channel is referred to as an MBS control channel.

The network can provide different MBS services for different MBS sessions. The MBS session is identified by a Temporary Mobile Group Identity (TMGI) and/or a session identifier. At least one of these identifiers is referred to as an MBS session identifier. Such an MBS session identifier may be referred to as an MBS service identifier or a multicast group identifier.

### Split MBS Bearer

A split MBS bearer according to an embodiment is described. The split MBS bearer is available in Delivery mode 1 described above.

The gNB 200 may configure an MBS bearer split into a PTP communication path and a PTM communication path (hereinafter referred to as a "split MBS bearer" as appropriate) for the UE 100. This allows the gNB 200 to dynamically switch transmission of the MBS traffic to the UE 100 between the PTP (PTP communication path) and the PTM (PTM communication path). The gNB 200 may perform duplication transmission of the same MBS traffic using both the PTP and the PTM to improve reliability. The gNB 200 may perform initial transmission of the MBS traffic to the plurality of UEs 100 in using PTM and perform retransmission of the MBS traffic to a specific UE 100 to improve reliability.

A predetermined layer terminating the split is the MAC layer (HARQ), the RLC layer, the PDCP layer, or the SDAP layer. Although an example in which the predetermined layer terminating the split is the PDCP layer will be mainly described below, the predetermined layer may be the MAC layer (HARQ), the RLC layer, or the SDAP layer.

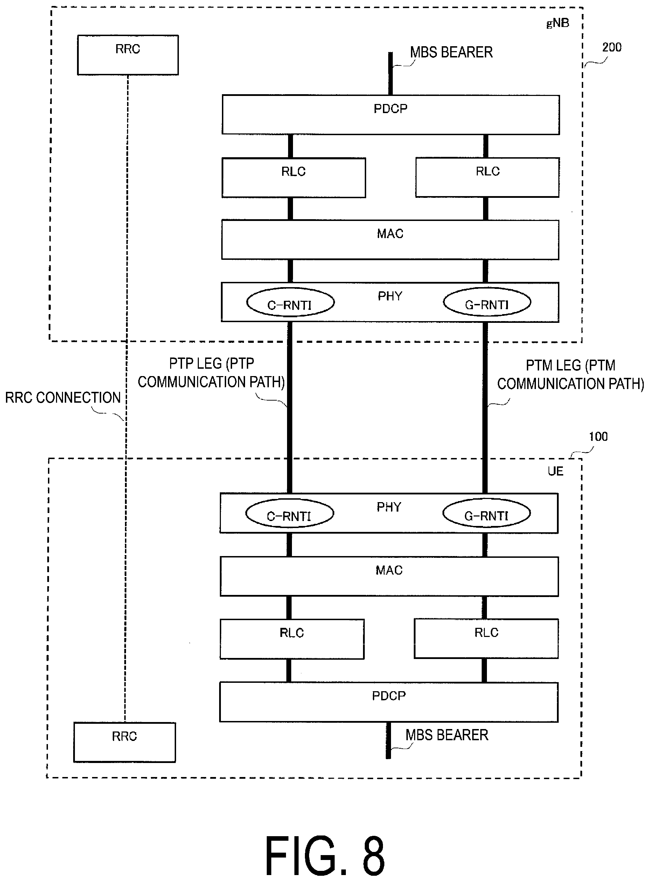

FIG. 8 is a diagram illustrating the split MBS bearer according to an embodiment. Hereinafter, the PTP communication path is referred to as a PTP leg, and the PTM communication path is referred to as a PTM leg. A functional unit corresponding to each layer is referred to as an entity.

As illustrated in FIG. 8, each of the PDCP entity of the gNB 200 and the PDCP entity of the UE 100 splits an MBS bearer, which is a bearer (data radio bearer) used for the MBS, into a PTP leg and a PTM leg. Note that the PDCP entity is provided for each bearer.

Each of the gNB 200 and the UE 100 includes two RLC entities provided per leg: one MAC entity and one PHY entity. The PHY entity may be provided per leg. Note that, in a Dual Connectivity in which the UE 100 communicates with two gNBs 200, the UE 100 may include two MAC entities.

The PHY entity transmits and receives data of the PTP leg using a cell RNTI (Cell Radio Network Temporary Identifier (C-RNTI)) that is allocated to the UE 100 on a one-to-one basis. The PHY entity transmits and receives data of the PTM leg using a group RNTI (Group Radio Network Temporary Identifier (G-RNTI)) allocated to the MBS session on a one-to-one basis. The C-RNTI is different for each UE 100, but the G-RNTI is an RNTI common to a plurality of UEs 100 receiving one MBS session.

For PTM transmission of the MBS traffic (multicast or broadcast) from the gNB 200 to the UE 100 using the PTM leg, the split MBS bearer needs to be established for the UE 100 from the gNB 200, and the PTM leg needs to be activated. In other words, even if the split MBS bearer is established for the UE 100, when the PTM leg is in a deactivation state, the gNB 200 cannot perform the PTM transmission of the MBS traffic using the PTM leg.

In order for the gNB 200 and the UE 100 to perform PTP transmission (unicast) of the MBS traffic using the PTP leg, the split MBS bearer needs to be established for the UE 100 from the gNB 200, and the PTP leg needs to be activated. In other words, even if the split MBS bearer is established for the UE 100, when the PTP leg is in a deactivation state, the gNB 200 cannot perform the PTP transmission of the MBS traffic using the PTP leg.

When the PTM leg is in an activated state, the UE 100 monitors a Physical Downlink Control Channel (PDCCH) to which a G-RNTI associated with the MBS session is applied (i.e., performs blind decoding of the PDCCH using the G-RNTI). The UE 100 may monitor the PDCCH only at a scheduling occasion of the MBS session.

When the PTM leg is in a deactivated state, the UE 100 does not monitor a PDCCH to which a G-RNTI associated with the MBS session is applied (i.e., does not perform blind decoding of the PDCCH using the G-RNTI).

When the PTP leg is in an activated state, the UE 100 monitors a PDCCH to which a C-RNTI is applied. When Discontinuous Reception (DRX) in the PTP leg is configured, the UE 100 monitors a PDCCH for a configured OnDuration period. When a cell (frequency) associated with the MBS session is specified, the UE 100 may monitor a PDCCH for the cell even when the cell is deactivated.

When the PTP leg is in a deactivated state, the UE 100 may monitor a PDCCH to which a C-RNTI is applied in preparation for normal unicast downlink transmission of traffic other than the MBS traffic. However, when a cell (frequency) associated with an MBS session is specified, the UE 100 need not monitor a PDCCH for the MBS session.

Note that it is assumed that the above-described split MBS bearer is configured by use of an RRC message (for example, an RRC Reconfiguration message) transmitted by the RRC entity of the gNB 200 to the RRC entity of the UE 100.

### Operation according to Embodiment

An operation according to an embodiment will be described. In the following, a case is mainly assumed in which Delivery mode 1 is used as the delivery mode.

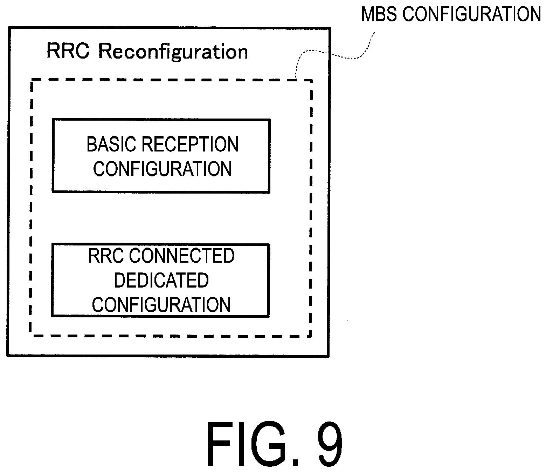

FIG. 9 is a diagram illustrating a configuration example of an RRC Reconfiguration message used for MBS reception configuration in Delivery mode 1. As illustrated in FIG. 9, the RRC Reconfiguration message transmitted from the gNB 200 to the UE 100 includes an MBS configuration used for MBS reception as an information element.

The MBS configuration includes a basic reception configuration, which is a basic configuration for MBS reception, and an RRC connected dedicated configuration, which is applicable only to MBS reception in the RRC connected state.

The basic reception configuration is a configuration common to all of the RRC states (i.e., RRC connected state, RRC idle state, and RRC inactive state). The basic reception configuration includes MTCH scheduling information. The MTCH scheduling information includes at least one selected from the group consisting of a group RNTI, an MBS session identifier, a transmission occasion, and a transmission Bandwidth Part (BWP).

Here, the group RNTI is an RNTI commonly assigned to the group of UEs 100. The transmission occasion is a candidate of a timing (for example, subframe) at which the gNB 200 transmits the MBS traffic using the MTCH. The transmission BWP is a BWP in which the gNB 200 transmits the MBS traffic using the MTCH. The BWP is a bandwidth part that is narrower than the frequency bandwidth of one cell and is for limiting the operating bandwidth of the UE 100.

On the other hand, the RRC connected dedicated configuration is a configuration related to the split MBS bearer or the like, and includes, for example, at least one selected from the group consisting of a bearer configuration of the split MBS bearer, a dynamic switching configuration between the PTP and the PTM, and a PTP leg configuration. Note that the PTM leg configuration can be used in the RRC idle state or the RRC inactive state, and the basic reception configuration may thus include the PTM leg configuration. The RRC connected dedicated configuration may include an HARQ feedback configuration.

In an embodiment, for example, when the UE 100 having the MBS configuration has no ongoing data for a multicast session, the gNB 200 transitions the UE 100 to the RRC idle state or the RRC inactive state. Here, the gNB 200 may be in a situation where the UE 100 cannot be maintained in the RRC connected state due to congestion.

The UE 100 desirably continues MBS reception even when having transitioned to the RRC idle state or the RRC inactive state. In an embodiment, the UE 100 continues to apply the MBS configuration provided through the RRC Reconfiguration message as the MBS configuration used in the RRC idle state or the RRC inactive state. That is, the UE 100 reuses the MBS configuration provided in the RRC connected state.

That is, when the UE 100 according to an embodiment is in the RRC connected state, the UE 100 receives, from the base station, the RRC Reconfiguration message (RRC message) including the MBS configuration necessary for the MBS reception. After transitioning from the RRC connected state to the RRC idle state or the RRC inactive state, the UE 100 performs the MBS reception using the MBS configuration received when in the RRC connected state.

Here, there is a problem in handling the RRC connected dedicated configuration in the MBS configuration. The UE 100 according to an embodiment performs a process of disabling the RRC connected dedicated configuration included in the MBS configuration received when in the RRC connected state, when transitioning to the RRC idle state or the RRC inactive state. This can save storage space of the UE 100 and suppress unexpected errors.

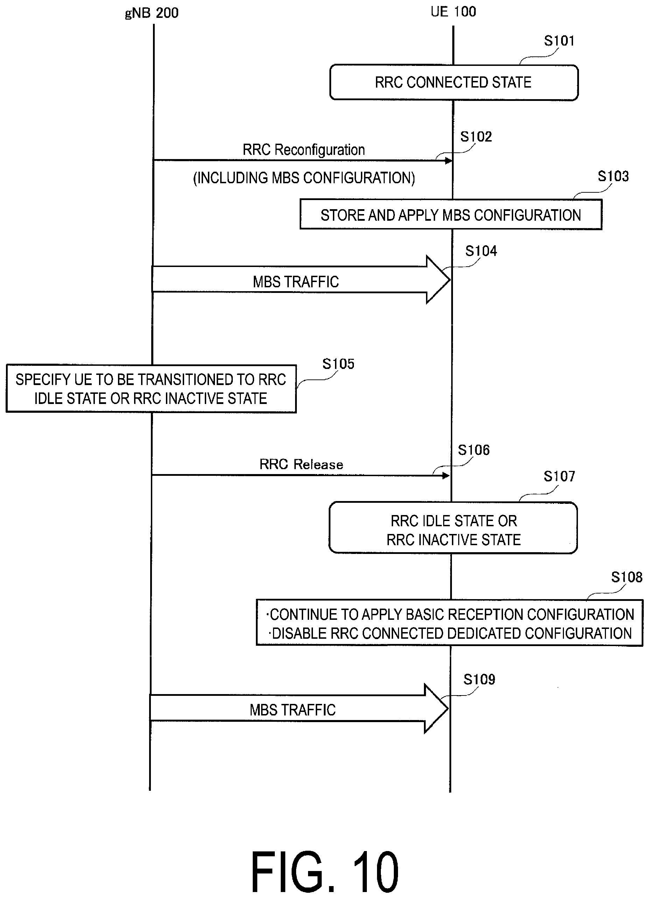

FIG. 10 is a diagram illustrating an operation according to an embodiment.

As illustrated in FIG. 10, in Step S101, the UE 100 is in the RRC connected state in a cell of the gNB 200.

In Step S102, the gNB 200 transmits, to the UE 100, an MBS configuration, that is, an RRC Reconfiguration message including a basic reception configuration and an RRC connected dedicated configuration. The UE 100 receives the RRC Reconfiguration message.

In Step S103, the UE 100 stores and applies the MBS configuration included in the received RRC Reconfiguration message.

In Step S104, the UE 100 receives MBS traffic from the gNB 200 by using the MBS configuration applied in Step S103, that is, the basic reception configuration and the RRC connected dedicated configuration.

In this manner, the UE 100 receives the MBS configuration by using the RRC Reconfiguration message and receives the MBS traffic.

Subsequently, in Step S105, the gNB 200 specifies the UE 100 to be transitioned to the RRC idle state or the RRC inactive state.

The gNB 200 may specify the UE 100 receiving a target MBS session as the UE 100 to be transitioned to the RRC idle state or the RRC inactive state. For example, when the MBS traffic of Step S104 is transmitted by multicasting, the gNB 200 requests the 5GC 20 to provide information and specifies the UE 100 receiving the target MBS session. On the other hand, when the MBS traffic of Step S104 is transmitted by broadcasting, the gNB 200 receives information from the UE 100 by using an MBS interest indication message (MII) in advance. The gNB 200 thereby specifies the UE 100 receiving the target MBS session.

The gNB 200 may specify the UE 100 not moving as the UE 100 to be transitioned to the RRC idle state or the RRC inactive state.

For the UE 100 during moving, the gNB 200 may need to perform handover control to guarantee continuity of the MBS service, and thus it is desirable to maintain the UE 100 during moving in the RRC connected state. On the other hand, the UE 100 not moving does not need to be maintained in such a manner, and thus the gNB 200 transitions the UE 100 not moving to the RRC idle state or the RRC inactive state. As a result, the load on the gNB 200 can be reduced.

When the UE 100 leaves a cell (or an area range described below), the MBS configuration of this cell may be disabled, but this is not the case for the UE 100 not moving. Thus, the gNB 200 transitions the UE 100 not moving to the RRC idle state or the RRC inactive state, so that the load on the gNB 200 can be reduced.

Note that the gNB 200 may specify the UE 100 staying in the cell of the gNB 200 for longer than a predetermined period of time as the UE 100 not moving. The gNB 200 may specify the UE 100 not moving based on position information periodically received from the UE 100. The gNB 200 may specify the UE 100 not moving by being notified of a moving state from the UE 100. The notification may be provided upon request from the gNB 200. The UE 100 itself may determinate (for example, when the moving state changes) to provide the notification. The gNB 200 may be notified of the moving state using the MBS interest indication (MII). The gNB 200 may be notified of the moving state in association with interest information for MBS reception.

In Step S106, the gNB 200 transmits an RRC Release message to the UE 100 specified in Step S105. The UE 100 receives the RRC Release message. The gNB 200 transmits, to the UE 100, an RRC Release message including a suspend config as an information element when transitioning the UE 100 to the RRC inactive state.

In Step S107, the UE 100 transitions to the RRC idle state or the RRC inactive state based on the received RRC Release message.

In Step S108, the UE 100 continues to apply the basic reception configuration and performs the processing of disabling the RRC connected dedicated configuration. The processing of disabling is discarding the RRC connected dedicated configuration, suspending the RRC connected dedicated configuration, or deactivating the RRC connected dedicated configuration.

When suspending or deactivating, the RRC connected dedicated configuration is held without being discarded. The held RRC connected dedicated configuration may be restored (enabled) when the UE 100 returns to the RRC connected state again. Note that an operation in which the UE 100 transitions from the RRC inactive state to the RRC connected state is referred to as resuming (RRC resume). The UE 100 need not enable the held RRC connected dedicated configuration at the time of RRC resume. The UE 100 may enable the RRC connected dedicated configuration when the cell at the time of transitioning to the RRC idle state or the RRC inactive state and the cell at the time of returning to the RRC connected state are the same, and need not enable the RRC connected dedicated configuration when these cells are different (will be described in detail using the variations below).

In Step S108, the UE 100 may release an entity used only in the RRC connected state, for example, the RLC entity of the PTP leg. The UE 100 may reconfigure a related entity by, for example, performing a configuration of deactivating a splitting (or combining) function of the PDCP entity.

In Step S109, the UE 100 continues to receive the MBS traffic in the RRC idle state or the RRC inactive state using the basic reception configuration.

### First Variation

A first variation of the above-described embodiment will be described while focusing on differences therefrom.

In the present variation, when transitioning from the RRC connected state to the RRC inactive state, the UE 100 holds the RRC connected dedicated configuration. As a result, the UE 100 can quickly configure the split MBS bearer or the like by effectively using the held configuration. Note that the gNB 200 when the UE 100 has transitioned to the RRC inactive state and the gNB 200 when the UE 100 returns to the RRC connected state may be the same and may also be different.

In the present variation, the UE 100 that has transitioned to the RRC inactive state holds the RRC connected dedicated configuration in the RRC inactive state. The UE 100 transmits, to the gNB 200, a notification indicating that the UE 100 holds the RRC connected dedicated configuration at the time of the resume operation of transitioning from the RRC inactive state to the RRC connected state. The gNB 200 that has received this notification instructs the UE 100 whether to enable the RRC connected dedicated configuration held by the UE 100.

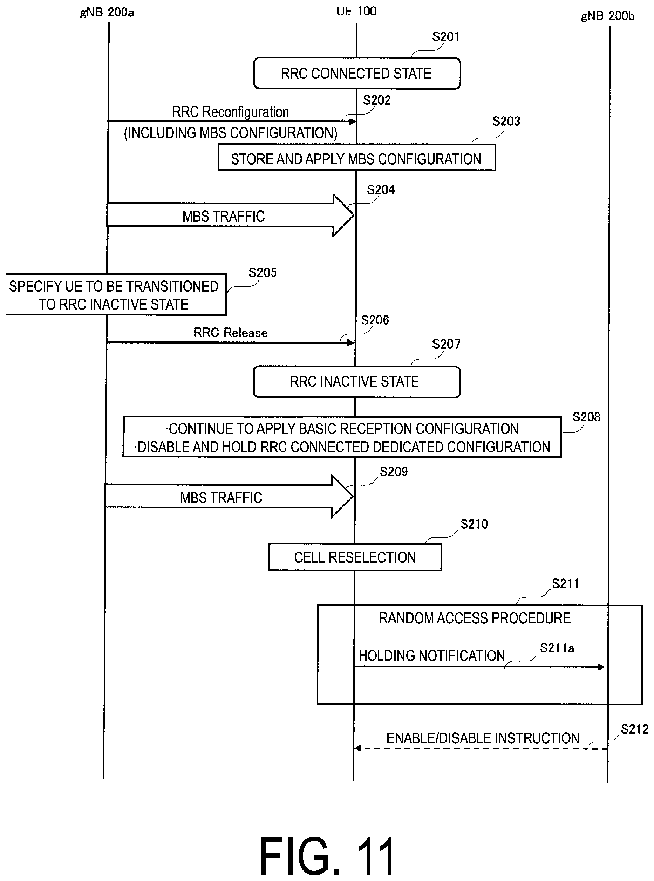

FIG. 11 is a diagram illustrating an operation according to the first variation of the embodiment. Here, an example will be described in which a gNB 200a when the UE 100 has transitioned to the RRC inactive state is different from a gNB 200b when the UE 100 returns to the RRC connected state.

As illustrated in FIG. 11, operations in Steps S201 to S208 are the same as, and/or similar to, those in the above-described embodiment. However, in the present variation, it is assumed that the UE 100 disables and holds the RRC connected dedicated configuration when transitioning to the RRC inactive state. In Step S109, the UE 100 continues to receive the MBS traffic in the RRC inactive state using the basic reception configuration.

In Step S210, the UE 100 in the RRC inactive state performs cell reselection from the cell of the gNB 200a to the cell of the gNB 200b.

When determining to resume the RRC connection, the UE 100 starts a random access procedure with the gNB 200b in Step S211.

A typical random access procedure when the RRC resume includes the following 1) to 5).
1) Transmission of a random access preamble (Msg1) from the UE 100 to the gNB 200b
2) Transmission of a random access response (Msg2) from the gNB 200b to the UE 100
3) Transmission of an RRC Resume Request message (Msg3) from the UE 100 to the gNB 200b
4) Transmission of an RRC Resume message (Msg4) from the gNB 200b to the UE 100
5) Transmission of an RRC Resume Complete message (Msg5) from the UE 100 to the gNB 200b

On the other hand, in the case of a two-step random access procedure, Msg1 and Msg3 are integrated into one message (MsgA), and Msg2 and Msg4 are integrated into one message (MsgB).

In such a random access procedure, the UE 100 transmits Msg1 or MsgA using a special Physical Random Access Channel (PRACH) resource. Accordingly, the UE 100 notifies the gNB 200b that the UE 100 holds the RRC connected dedicated configuration (Step S211a). The UE 100 transmits Msg3, MsgA, or Msg5 including an information element indicating that the UE 100 holds the RRC connected dedicated configuration. Accordingly, the UE 100 notifies the gNB 200b that the UE 100 holds the RRC connected dedicated configuration (Step S211a).

The gNB 200b having received the holding notification from the UE 100 determines whether to enable the RRC connected dedicated configuration held by the UE 100 and transmits an instruction indicating the determination result to the UE 100 (Step S212). For example, the gNB 200b may determine to enable the RRC connected dedicated configuration held by the UE 100 only when context information of the UE 100 is acquired from the gNB 200a.

When the UE 100 receives the instruction to enable the RRC connected dedicated configuration from the gNB 200b, the UE 100 enables the held RRC connected dedicated configuration. On the other hand, when the UE 100 does not receive the instruction to enable the RRC connected dedicated configuration from the gNB 200b, the UE 100 does not enable the held RRC connected dedicated configuration. In this case, the UE 100 may discard the held RRC connected dedicated configuration.

### Second Variation

A second variation of the above-described embodiment will be described while focusing on differences from the above-described embodiment. In the present variation, it is assumed that when transitioning from the RRC connected state to the RRC idle state or the RRC inactive state, the UE 100 holds the RRC connected dedicated configuration.

The multicast session (Delivery mode 1) is a network-controlled delivery mode in which the UE 100 is essentially maintained in the RRC connected state. However, due to temporary network congestion or the like, the UE 100 is transitioned to the RRC idle state or the RRC inactive state.

On the other hand, it is assumed that the split MBS bearer in the RRC connected dedicated configuration is often configured in the UE 100 at a cell edge. For example, since the UE 100 at the cell edge has poor radio conditions, the gNB 200 can transmit the MBS traffic using the PTP leg. Since it is highly likely that the UE 100 at the cell edge performs handover, the gNB 200 can transmit the MBS traffic using the PTP leg to eliminate packet loss during the handover.

In the present variation, the UE 100, which transitions to the RRC idle state or the RRC inactive state and holds the RRC connected dedicated configuration, notifies the gNB 200 before performing cell reselection to another cell at the cell edge. This allows the gNB 200 (network) to perform mobility control on the UE 100 based on the notification.

In the present variation, when determining that a predetermined condition (trigger condition) related to the cell reselection has been satisfied in the RRC idle state or the RRC inactive state, the UE 100 starts a random access procedure with respect to the gNB 200. In the random access procedure, the UE 100 transmits, to the gNB 200, a notification indicating that the predetermined condition has been satisfied.

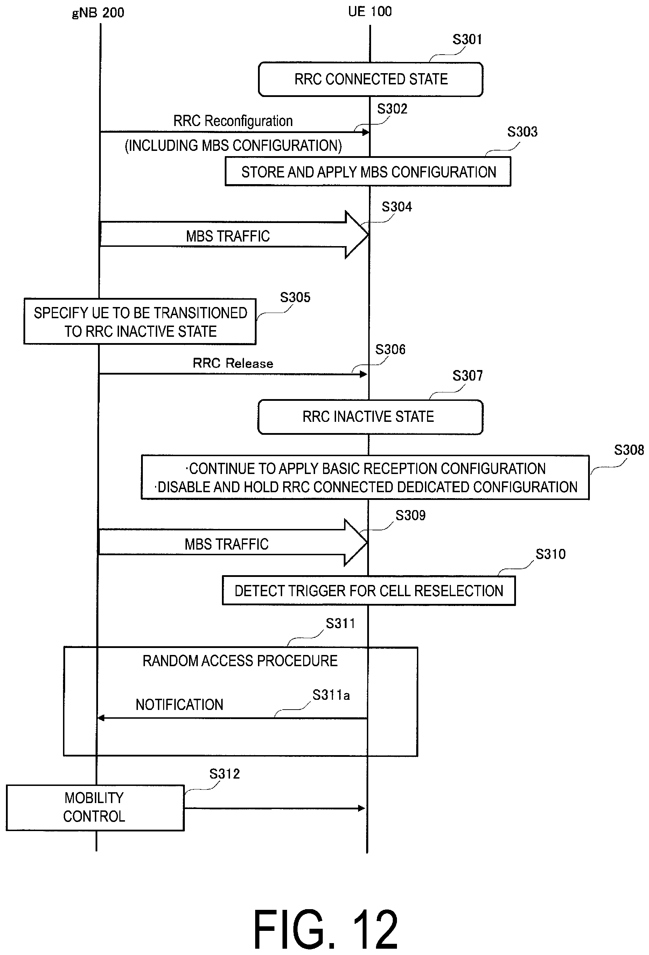

FIG. 12 is a diagram illustrating an operation according to the second variation of the embodiment. Here, although a case in which the UE 100 transitions to the RRC inactive state is assumed, a case in which the UE 100 transitions to the RRC idle state may also be assumed. That is, the RRC inactive state in FIG. 12 may be read as the RRC idle state.

As illustrated in FIG. 12, operations in Steps S301 to S308 are the same as, and/or similar to, those in the above-described embodiment. However, in the present variation, it is assumed that the UE 100 disables and holds the RRC connected dedicated configuration when transitioning to the RRC inactive state (or the RRC idle state). In Step S309, the UE 100 continues to receive the MBS traffic in the RRC inactive state (or RRC idle state) using the basic reception configuration.

In Step S310, the UE 100 detects a trigger related to cell reselection from the cell of the gNB 200 to another cell. The trigger condition related to the cell reselection may be a condition for actually triggering the cell reselection or a condition indicating a sign of triggering the cell reselection. The trigger condition may include threshold values (for example, RSRP/RSRQ threshold values) configured by the gNB 200 in the UE 100 and information (event information) designating a comparison target thereof.

When detecting the trigger related to the cell reselection, the UE 100 starts a random access procedure with the gNB 200 in Step S311.

In this random access procedure, the UE 100 transmits, to the gNB 200, a notification indicating that the trigger condition related to the cell reselection has been satisfied. As a method for such a notification, a method that is the same as, and/or similar to, the method according to the first variation of the above-described embodiment can be used. That is, the UE 100 transmits Msg1 or MsgA using a special PRACH resource, thereby notifying the gNB 200 that the trigger condition related to the cell reselection has been satisfied (Step S311a). The UE 100 transmits Msg3, MsgA, or Msg5 including an information element indicating that the trigger condition related to the cell reselection has been satisfied, thereby notifying the gNB 200 that the trigger condition related to the cell reselection has been satisfied (Step S311a). Note that, for use of mobility control in Step S312, the UE 100 may transmit, to the gNB 200, a measurement report including a radio measurement result indicating a radio condition of the UE 100.

In Step S312, the gNB 200 performs the mobility control (handover control or cell reselection control) on the UE 100 based on the notification received from the UE 100 in Step S311a. For example, the gNB 200 performs handover to another cell after transitioning the UE 100 to the RRC connected state. The gNB 200 causes the UE 100 to perform the cell reselection to another cell after keeping the UE 100 in the RRC idle state or the RRC inactive state. In this case, the gNB 200 may instruct the UE 100 to discard the RRC connected dedicated configuration.

### Third Variation

A third variation of the above-described embodiment will be described while focusing on differences from the above-described embodiment.

In the present variation, it is assumed that the UE 100 including the RRC connected dedicated configuration in the RRC connected state is not permitted to transition to the RRC idle state or the RRC inactive state. Under such an assumption, the gNB 200 causes the UE 100 to release (discard) the RRC connected dedicated configuration before transitioning the UE 100 to the RRC idle state or the RRC inactive state, and then transitions the UE 100 to the RRC idle state or the RRC inactive state. After the gNB 200 causes the UE 100 to release the RRC connected dedicated configuration, the UE 100 transitions to the RRC idle state or the RRC inactive state.

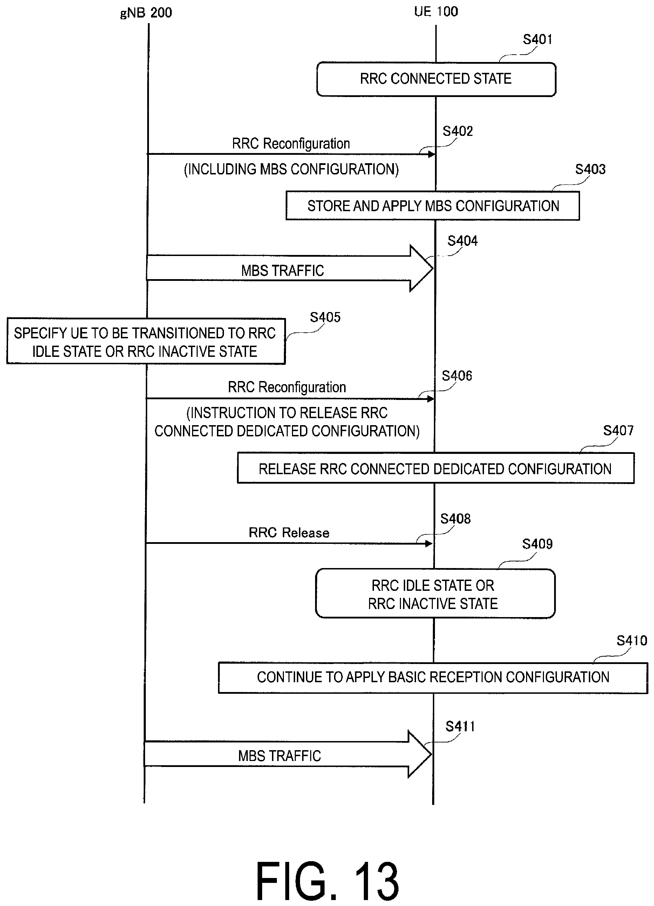

FIG. 13 is a diagram illustrating an operation according to the third variation of the embodiment.

As illustrated in FIG. 13, operations in Steps S401 to S405 are the same as, and/or similar to, those in the above-described embodiment. However, in Step S405, the gNB 200 may specify the UE 100 capable of transitioning to the RRC idle state or the RRC inactive state. For example, the gNB 200 specifies the UE 100 unlikely to perform uplink transmission for a certain period of time or the UE 100 not performing unicast communication. In Step S405, the gNB 200 may specify the UE 100 that has transmitted a message prompting release of the RRC connection, for example, a Release Assistance Information (RAI) message.

In Step S406, the gNB 200 transmits, to the specified UE 100, an RRC Reconfiguration message including an information element indicating release of the RRC connected dedicated configuration.

In Step S407, the UE 100 releases (discards) the RRC connected dedicated configuration upon receipt of the RRC Reconfiguration message in Step S406. The UE 100 is brought into a state of including only the MBS configuration (basic reception configuration) of the PTM in the MBS configuration.

In Step S408, the gNB 200 transmits an RRC Release message to the UE 100 that has released the RRC connected dedicated configuration. The UE 100 receives the RRC Release message.

In Step S409, the UE 100 transitions to the RRC idle state or the RRC inactive state based on the received RRC Release message.

In Step S410, the UE 100 continues to apply the basic reception configuration.

In Step S411, the UE 100 continues to receive the MBS traffic in the RRC idle state or the RRC inactive state using the basic reception configuration.

In the present variation, a scenario in which the MBS configuration is performed using the RRC Reconfiguration message is assumed, but a scenario in which the MBS configuration is performed using the RRC Release message may also be assumed. In the scenario in which the MBS configuration is performed using the RRC Release message, transmission of the RRC Reconfiguration message in Step S406 is unnecessary. In such a scenario, the gNB 200 may be not permitted to perform the RRC connected dedicated configuration using the RRC Release message. For example, a condition may be configured such that an information element related to the RRC connected dedicated configuration cannot be used in the RRC Release message.

### Fourth Variation

A fourth variation of the above-described embodiment will be described while focusing on differences from the above-described embodiment.

In the present variation, it is assumed that the MBS configuration is made common in an area range including a plurality of cells. This allows the UE 100 that has transitioned to the RRC idle state or the RRC inactive state to continue to receive the MBS traffic without having to update the MBS configuration within the area range. The area range may be defined as an area in which the notification according to the first variation and the second variation of the above-described embodiment is unnecessary.

Specifically, the UE 100 according to the present variation receives, from the gNB 200, an RRC message (RRC Reconfiguration message or RRC Release message) including area information indicating an area range in which the MBS configuration is valid. The UE 100 that has transitioned to the RRC idle state or the RRC inactive state performs the MBS reception using the MBS configuration within the area range indicated by the area information.

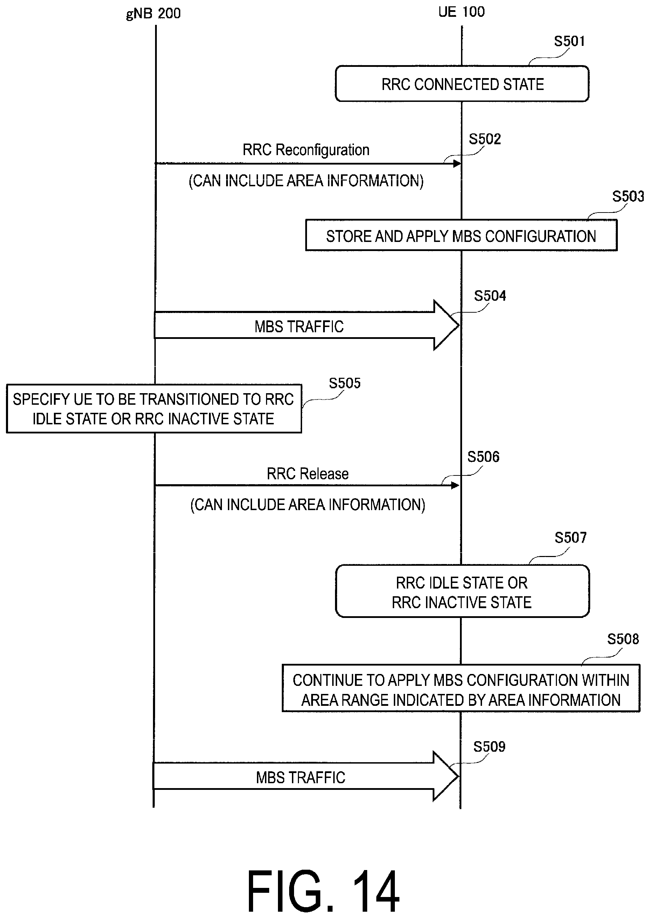

FIG. 14 is a diagram illustrating an operation according to the fourth variation of the embodiment.

As illustrated in FIG. 14, operations in Steps S501 to S507 are the same as, and/or similar to, those in the above-described embodiment. However, in Step S502 or S506, the gNB 200 transmits, to the UE 100, the area information together with the MBS configuration, thereby configuring, in the UE 100, the area range in which the MBS configuration is valid. The area information may be a list including identifiers (cell identifiers) of respective cells constituting the area range. Since each cell broadcasts the identifier thereof, the UE 100 can determine whether the UE 100 is within the area range using the configured list. The area information may be an identifier (area identifier) indicating the area range. Since each cell broadcasts the area identifier of the area range to which the cell belongs, the UE 100 can determine whether the UE 100 is within the area range using the configured area identifier.

In Step S507, the UE 100 transitions to the RRC idle state or the RRC inactive state based on the RRC Release message received in Step S506.

In Steps S508 and S509, the UE 100 continues to receive the MBS traffic using the basic reception configuration in the MBS configuration configured by the gNB 200. Here, the UE 100 considers the MBS configuration to be valid within the area range configured by the gNB 200 and does not notify the network even when performing the cell reselection.

When moving to a cell outside the area range, the UE 100 performs random access to the cell outside the area range, thereby receiving a new MBS configuration from the cell. When detecting a cell outside the area range, the UE 100 may perform random access to the current cell before moving out of the area range, thereby receiving the new MBS configuration from the cell.

### Fifth Variation

A fifth variation of the above-described embodiment will be described while focusing on differences from the above-described embodiment.

In the present variation, the gNB 200 notifies, by using an RRC Release message, the UE 100 about whether the MBS configuration (specifically, the basic reception configuration) obtained through the RRC Reconfiguration message may be used even in the RRC idle state or the RRC inactive state. That is, the UE 100 receives, from the gNB 200, an RRC Release message including information indicating whether to enable the MBS configuration received in the RRC connected state to be used in the RRC idle state or the RRC inactive state.

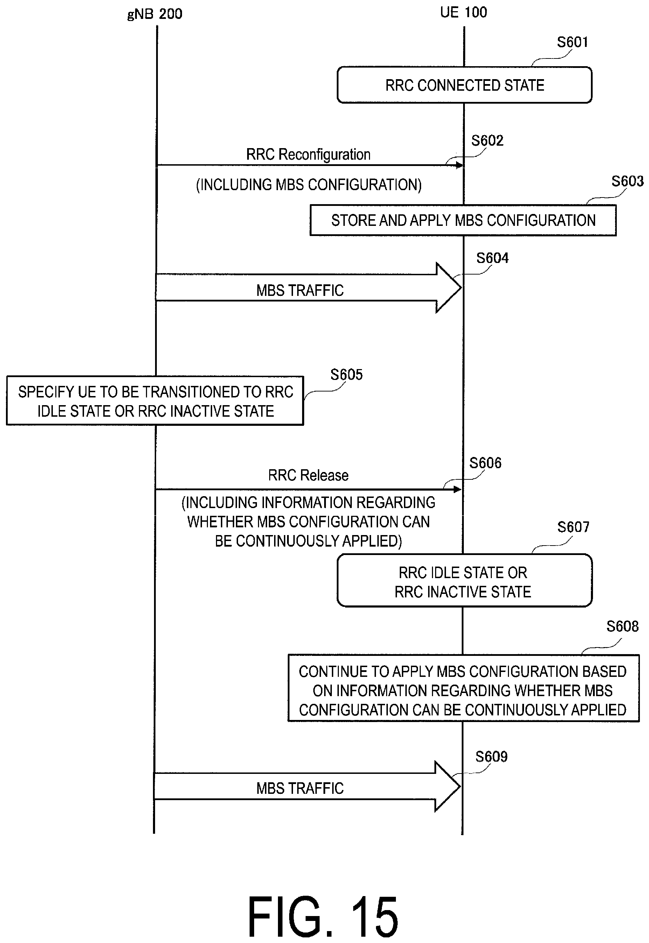

FIG. 15 is a diagram illustrating an operation according to the fifth variation of the embodiment.

As illustrated in FIG. 15, operations in Steps S601 to S609 are the same as, and/or similar to, those in the above-described embodiment. However, in Step S606, the gNB 200 transmits, to the UE 100, an RRC Release message including any of the following pieces of information A) and B).

A) Information indicating whether the MBS configuration configured by using the RRC Reconfiguration message in Step S602 may be continuously used in the RRC idle state or the RRC inactive state.

B) Information indicating a validity period when the MBS configuration configured by using the RRC Reconfiguration message in Step S602 is used in the RRC idle state or the RRC inactive state. The information indicating the validity period may be represented by at least one selected from the group consisting of a System Frame Number (SFN), a Hyper SFN (H-SFN), and a subframe. The information indicating the validity period may be a timer value indicating the time length of the validity period.

In the case of A) described above, the UE 100 continues to use the MBS configuration in the RRC Reconfiguration message of Step S606 in the RRC idle state or the RRC inactive state only when having received, from the gNB 200, the RRC Release message including information indicating that continuous use is permitted (Step S602).

In the case of B) described above, the UE 100 continues to use the MBS configuration in the RRC Reconfiguration message of Step S602 in the RRC idle state or the RRC inactive state only during the validity period configured by using the RRC Release message. If the validity period is configured based on the timer value, the UE 100 activates a timer (a timer corresponding to the timer value) when transitioning to the RRC idle state or the RRC inactive state (Step S607) and continues to use the MBS configuration until the timer expires.

Here, the UE 100 still interested in MBS reception when the validity period expires (the timer runs out) may receive a new MBS configuration from the gNB 200 by performing random access to the gNB 200. In the random access procedure, the UE 100 may notify the gNB 200 that this access is for updating the MBS configuration. The notification may be indicated by Msg1/MsgA using a special PRACH resource or indicated by Msg3. Alternatively, when the MBS configuration in Delivery mode 2 is broadcast through the SIB or the MCCH, the UE 100 may attempt to acquire the MBS configuration in Delivery mode 2. On the other hand, the UE 100 not interested in the MBS reception anymore when the validity period elapses may discard the MBS configuration configured by using the RRC Reconfiguration message.

### Sixth Variation

A sixth variation of the above-described embodiment will be described while focusing on differences from the above-described embodiment.

In the present variation, the UE 100 receives an RRC Release message including neighbor cell information. The neighbor cell information includes an identifier of a neighbor cell and an identifier indicating an MBS service (MBS session) provided by the neighbor cell. This allows the UE 100 to preferentially select a cell that provides an MBS service in which the UE 100 is interested when performing cell reselection in the RRC idle state or the RRC inactive state. The UE 100 that has transitioned to the RRC idle state or the RRC inactive state performs the cell reselection based on the received neighbor cell information.

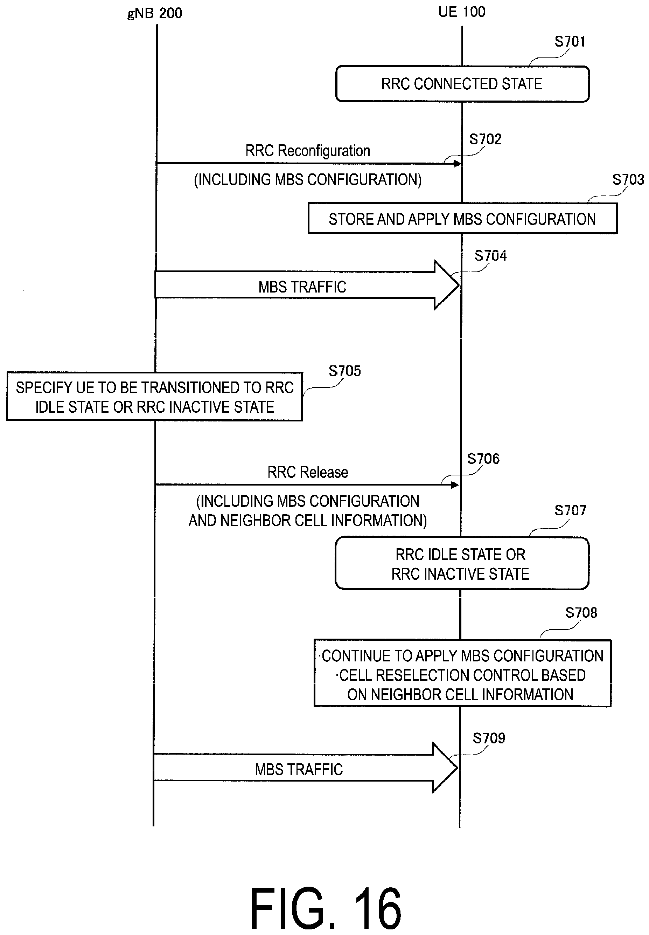

FIG. 16 is a diagram illustrating an operation according to the sixth variation of the embodiment.

As illustrated in FIG. 16, operations in Steps S701 to S709 are the same as, and/or similar to, those in the above-described embodiment. However, in Step S706, the gNB 200 transmits, to the UE 100, an RRC Release message including neighbor cell information. The gNB 200 may transmit, to the UE 100, an RRC Release message including neighbor cell information and an MBS configuration (specifically, basic reception configuration).

The neighbor cell information includes an identifier of a neighbor cell (cell identifier) and a list of identifiers indicating MBS services (session identifiers) provided by the neighbor cell. The UE 100 performs cell reselection considering a cell providing an MBS configuration in which the UE 100 is interested as having the highest priority in the cell reselection.

### Other Embodiments

The variations described above can be implemented not only separately and independently, but also in combination of two or more of the variations.

In the embodiments described above, an example in which the base station is an NR base station (gNB) is described; however, the base station may be an LTE base station (eNB). The base station may be a relay node such as an Integrated Access and Backhaul (IAB) node. The base station may be a Distributed Unit (DU) of the IAB node.

A program causing a computer to execute each of the processes performed by the UE 100 or the gNB 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM.

Circuits for executing the processes to be performed by the UE 100 or the gNB 200 may be integrated, and at least part of the UE 100 or the gNB 200 may be configured as a semiconductor integrated circuit (a chipset or an SoC).

### Supplementary Note

### Introduction

Revised work items have been approved that are related to NR multicast and broadcast services (MBS). It has been agreed that two delivery modes of the MBS are to be introduced as follows.

·In Rel-17, R2 defines the following two modes.
1: Delivery mode for high QoS (reliability, delay) requirements available in the connected state (the UE can be switched to another state when there is no data reception, but this is not determined yet).
2: Delivery mode for "low" QoS requirements. The UE can also receive data in the inactive/idle state (details are not determined yet).
   ·R2 assumes that Delivery mode 1 is only used for multicast sessions (in the case of R17).
   ·R2 assumes that Delivery mode 2 is used for broadcast sessions.
   ·The applicability of Delivery mode 2 to multicast sessions needs further study.
   ·No data: When there is no ongoing data in a multicast session, the UE can remain in the RRC connected state. Further study is needed in the other cases.

For Delivery mode 2, an overview of the MBS configuration has been additionally agreed upon as follows.

The UE receives the MBS configuration (in the case of broadcast/Delivery mode 2) through the BCCH and/or MCCH (not yet determined), which can be received in the idle/inactive mode. Further study is needed for the connected mode. The notification mechanism is used to notify a change in the MBS control information.

In this supplementary note, the control plane aspect of the NR MBS is considered in view of the LTE eMBMS mechanism and the latest RAN2 agreement.

### Discussion

In accordance with the agreement of RAN2, the two delivery modes at this point are summarized in Table 1.

**[Table 1]**

| | Delivery mode 1 | Delivery mode 2 |
|---|---|---|
| Intended for | Multicast sessions | Broadcast sessions |
| | (High QoS requirement) | Multicast sessions (FFS) |
| | | (Low QoS requirement) |
| Data reception in | Connected IDLE/INACT IVE (TBD) | Connected IDLE/INACTIVE |
| Configuration reception in | | Connected (FFS) |
| | | IDLE/INACTIVE |
| Configuration signal ling by | | BCCH |
| | | MCCH (TBD) |
| Other | | A notification mechanism |

### Delivery Mode 1 Configuration

Delivery mode 1 is mainly studied for data reception in an RRC connected state, but the configuration aspect thereof is not yet agreed upon. Although it may be very straightforward for an MBS configuration to be provided through RRC reconfiguration, receiving an MCCH in the connected state as in LTE eMBMS is still under study. Considering that Delivery mode 1 is expected for high QoS services, Delivery mode 1 may involve, for example, a PTP/PTM split bearer and/or lossless handover. Since there is no point to these UE-specific configurations when the configurations are provided through the MCCH, the RRC reconfiguration may be used for the configuration of Delivery mode 1 in our view.

Proposal 1: In Delivery mode 1, RAN2 should agree to use the RRC reconfiguration for the MBS configuration.

On the other hand, WID explicitly indicates that the RRC connected state and the RRC idle/inactive state should have maximum commonalities with respect to the MBS configuration as follows, but RAN2 has agreed upon separate delivery modes for multicast and broadcast sessions.

Changes are defined that are required to enable the UE in the RRC idle/inactive state to receive PTM transmission in order to maintain maximum commonalities between the RRC connected state and the RRC idle/inactive state for configuration of PTM reception.

Even when the RRC messages of these delivery modes are different, the structure and IE of the MBS configuration should be adjusted as much as possible between the two delivery modes to achieve the purpose of the WID. For example, the RRC reconfiguration of Delivery mode 1 includes information specific to Delivery mode 1 such as PTP/PTM split bearer and handover related information, in addition to MTCH scheduling information, which is a block common to Delivery mode 2. Details thereof need to be further studied.

Proposal 2: RAN2 should agree to aim for maximum commonalities between the two delivery modes from the viewpoint of the MBS configuration, for example, by using common structures and IEs.

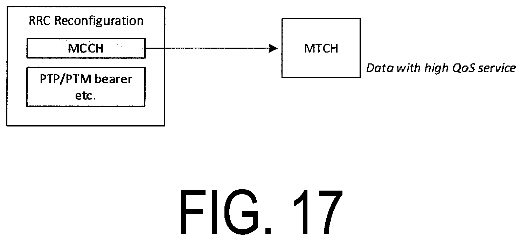

Note that the "MCCH" in FIG. 17 refers only to the MTCH scheduling information, i.e., the MTCH configuration related to the MBS session information. In the case of Delivery mode 1, neighbor cell information is not necessary.

Whether the UE can be released to the idle/inactive state when there is no ongoing data for a multicast session needs further study. In other words, whether the UE in the idle/inactive state can receive the MBS data via Delivery mode 1 needs further study. As agreed upon by RAN2, the baseline is that the UE should remain in the RRC connected state for Delivery mode 1, that is, for multicast sessions requiring high QoS. However, other/exceptional cases are still worth studying.

During e-mail discussions, some companies have pointed out that a network may not be able to keep all of the UEs in the connected state due to congestion. Other companies have also pointed out that the UE does not need to always remain in the connected state for uplink activity, QoS requirements, and/or power consumption of the UE.

From the viewpoint of RAN2, it may be considered beneficial for both the network and the UE to support this functionality. It is assumed that whether/when the UE is released to be inactive depends on the implementation of the gNB and whether the UE is released to be idle depends on the core network. One concern with respect to MBS data reception in the idle state is that the gNB releases the UE context. On the other hand, the UE context is kept inactive. This means that the controllability of the gNB may be lost, which may be contradictory to the concept of general Delivery mode 1. RAN2 should agree that the UE can receive Delivery mode 1 at least in the inactive state, but further study is needed concerning the idle state.

Proposal 3: In Delivery mode 1, RAN2 should agree that the UE can receive Delivery mode 1 at least in the inactive state. Further study is needed concerning the idle state.

When Proposal 3 can be agreed upon, it is not clear how the idle/inactive MBS configuration is provided to the UE. There are three possible options.

### ·Option 1: RRC reconfiguration

The idle/inactive UE continues to employ the MBS configuration provided through the RRC reconfiguration. This option is simple because the UE only reuses the MBS configuration originally provided for the RRC connected state. However, when transitioning to the idle/inactive state and/or resuming the RRC connected state, some UE operations may need to be studied. For example, how to handle the PTP/PTM split bearer configuration when the configuration is performed.

### ·Option 2: RRC release

The idle/inactive UE employs the MBS configuration provided through the RRC release. This option is clear but may not be efficient, because it is doubtful whether the MBS configuration is different from the MBS configuration previously provided through the RRC reconfiguration.

### ·Option 3: Switching of the delivery mode from Mode 1 to Mode 2

The UE is switched from Delivery mode 1 to Delivery mode 2 before being released to the idle/inactive state. This option is another simple solution since Delivery mode 2 is designed to be able to receive data in all the RRC states as agreed upon by the RAN2. However, it may be expected that packet loss and/or delay will occur during switching, for example, due to acquisition of the MCCH.

Each option has advantages and disadvantages, but in our opinion, Option 1 is slightly more desirable from the viewpoint of simplicity and efficiency. RAN2 should consider the above options but no such limitation is intended, and RAN2 also should discuss a method of providing the Delivery mode 1 configuration for data reception in the idle/inactive state.

Proposal 4: When Proposal 3 can be agreed upon, RAN2 should discuss how the Delivery mode 1 configuration for data reception in the inactive state is provided to the UE.

### Delivery Mode 2 Configuration

In the LTE SC-PTM, configurations are provided through two messages, i.e., SIB 20 and SC-MCCH. The SIB 20 provides SC-MCCH scheduling information, and the SC-MCCH provides SC-MTCH scheduling information including the G-RNTI and the TMGI, and neighbor cell information.

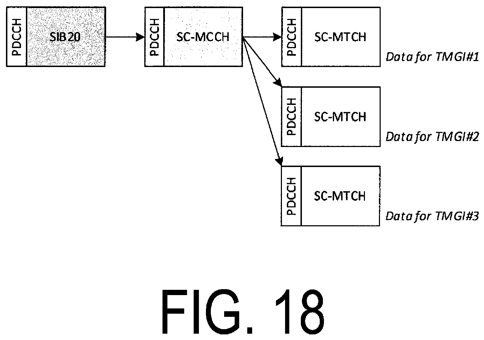

An advantage of the LTE two-stage configuration as illustrated in FIG. 18 is that the SC-MCCH scheduling is independent from the SIB 20 scheduling in terms of repetition period, duration, change period, and the like. The two-stage configuration facilitates frequent scheduling/update of the SC-MCCH, particularly for delay sensitive services and/or UEs that are delayed in participating in the session. According to the WID, one of the applications is group communication or the like, and is thus the same as, and/or similar to, the NR MBS.

Observation 1: In LTE, the two-stage configuration using the SIB 20 and the SC-MCCH is useful for different scheduling operations for these control channels. This is also useful for the NR MBS.

Proposal 5: RAN2 should agree on use of the two-stage configuration with different messages for the NR MBS, such as the SIB 20 and the SC-MCCH for the SC-PTM.

In addition to Proposal 5, the NR MBS is assumed to support various types of use cases described in the WID. It is appreciated that the NR MBS should be appropriately designed for a variety of requirements ranging from delay sensitive applications such as mission critical applications and V2X to delay tolerant applications such as IoT, in addition to the other aspects of requirements ranging from lossless application such as software delivery to UDP type streaming such as IPTV. Some of these services may be covered by Delivery mode 2, while other services with "high QoS requirements" require Delivery mode 1. In this sense, it is beneficial for the gNB to be able to choose use of Delivery mode 2 for multicast sessions.

It is also easy to allow the UE in the RRC connected state to receive the MBS configuration since RAN2 has already agreed to allow data reception in the RRC connected state. It is pointless for the UE having to transition to the idle/inactive state only to acquire the MCCH. Allowing the UE in the connected state to receive the MCCH is easy but may not be optimal in terms of flexibility in scheduling (since the UE may need a "gap") and/or power consumption of the UE (since the UE needs to monitor the "SC-RNTI" in addition to the C-RNTI and G-RNTI). Thus, whether the UE receives the MBS configuration through the MCCH or RRC reconfiguration may need to be discussed further.

These two challenges remain, but in general there seems to be no technical reason to limit them from our viewpoint.

Proposal 6: RAN2 should agree that Delivery mode 2 can be used for multicast sessions in addition to broadcast sessions.

Proposal 7: In Delivery mode 2, RAN2 should agree that the MBS configuration can also be received by the UE in the RRC connected state. Whether the MCCH or RRC reconfiguration is used needs further study.

The control channel in Delivery mode 2 should be designed in consideration of flexibility and the resource efficiency of the control channel in view of Proposal 6. Otherwise, for example, when one control channel includes a configuration of a delay tolerant service and a configuration of a delay sensitive service, the control channel needs to be frequently scheduled in order to satisfy delay requirements from the delay sensitive service. This may cause more signaling overheads.

An object A of the SA2 SI relates to enabling of general MBS services via 5GS, and specified use cases capable of benefiting from this function include (but are not limited to) public safety, mission critical applications, V2X applications, transparent IPv4/IPv6 multicast delivery, IPTV, wireless software delivery, group communications, and IoT applications.

Observation 2: The NR MBS control channel for Delivery mode 2 needs to be flexible and resource efficient with respect to various types of use cases.

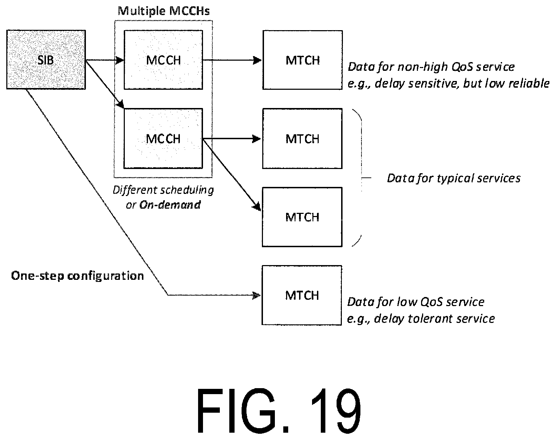

As illustrated in FIG. 19, whether configuration channels need to be separated in different use cases is studied as one possibility. For example, one MCCH frequently provides a delay sensitive service, and another MCCH infrequently provides a delay tolerant service. The LTE SC-PTM is limited in that one cell includes only one SC-MCCH. However, considering that more use cases are assumed than those of LTE, such limitation should be eliminated in the NR MBS in Delivery mode 2. When a plurality of MCCHs are allowed within the cell, each MCCH includes a scheduling configuration with a different repetition period which can be optimized for a specific service. How to identify the MCCH providing a service in which the UE takes interest needs further study.

Proposal 8: In Delivery mode 2, RAN2 should discuss whether a plurality of MCCHs are supported in the cell, which is not supported in LTE.

A new paradigm of NR is support for on-demand SI transmission. This concept may be reused for the MCCH in Delivery mode 2, i.e., on-demand MCCH. For example, the MCCH for delay tolerant services is provided on demand, thus enabling resource consumption for signaling to be optimized. Naturally, the network includes another option for providing the MCCH for delay sensitive services periodically, i.e., not based on a demand.

Proposal 9: Regarding Delivery mode 2, RAN2 should discuss an option when the MCCH is provided on demand, which is not supported by LTE.

As illustrated in FIG. 19, merging the above-described messages, i.e., one-stage configuration, may be further studied as another possibility. For example, the SIB provides MTCH scheduling information directly, i.e., without the MCCH. This will provide optimization for delay tolerant services and/or power sensitive UEs. For example, the UE may request the SIB (on demand), and the gNB may start providing the SIB and the corresponding service after requests from a plurality of UEs. These UEs do not need to monitor the repeatedly broadcast MCCH.

Proposal 10: Regarding Delivery mode 2, RAN2 should discuss options such as direct provision of the MTCH scheduling information in the SIB when multicast reception with no use of the MCCH (i.e., one-stage configuration) is supported.

### Interest Indication/Counting

In LTE eMBMS, in order for the network to perform appropriate determination of MBMS data delivery including start/stop of MBMS sessions, two types of methods of collecting a UE reception/interest service are specified, i.e., MBMS interest indication (MII) and MBMS counting. MII triggered by the UE includes information related to an MBMS frequency of interest, an MBMS service of interest, an MBMS priority, and MBMS reception-only mode (ROM). A counting response triggered by the network via a counting request for a specific MBMS service includes information related to an MBSFN area and an MBMS service of interest.

These methods were introduced for various purposes. MII is mainly used by the network in order to ensure that the UE can continuously receive a service that the UE is interested in while being in the connected state. In contrast, counting is used to enable the network to determine whether a sufficient number of UEs are interested in receiving a service.

Observation 3: In LTE e MBMS, two types of UE assistance information are introduced for different purposes. In other words, MBMS interest indication is introduced for scheduling of NB, and MBMS counting is introduced for session control of MCE.

In a case of NR MBS, multicast services for use cases of group communication and the like are expected, and the network already has full knowledge related to the MBS service that the UE in the connected state is receiving/interested in, and thus assistance information from the UE, such as the network's determination regarding PTP/PTM delivery, is useless to the network. However, our understanding is that the same does not apply to broadcast services and/or the UEs in the idle/inactive state. In a case of broadcast services in particular, NR MBS still has the problem solved by MII and counting in LTE eMBMS, i.e., Observation 3. Thus, in RAN2, whether the assistance information, such as MII and counting, is useful for NR MBS needs to be studied.

As described in WID, since ROM and SFN are not supported in Rel-17, it is noted that MBMS ROM information of MII and information related to the MBSFN area of the counting response are not necessary.

Proposal 11: In RAN2, for example, introduction of the UE assistance information of NR MBS, such as MBS interest indication and/or MBS counting, needs to be agreed upon.

When Proposal 11 can be agreed upon, it is worthwhile to carry out a study on extended functions, in addition to LTE eMBMS. In LTE eMBMS, even when most of the UEs receive broadcast services in the RRC idle state, information of neither MII nor counting can be collected from the UEs in the idle state. To our understanding, this is one remaining problem that LTE eMBMS has from the viewpoint of session control and resource efficiency.

In NR MBS, the same problem may be present in the UEs in the idle/inactive state. For example, the network cannot know whether the UEs in the idle/inactive state are receiving/interested in broadcast services. Thus, the network may continue to provide PTM transmission even when there are no UEs being served. If the gNB recognizes interest of the UEs in the idle/inactive state, such unnecessary PTM should be avoided. Conversely, if PTM stops while UEs in the idle/inactive state receiving services are still present, many UEs may simultaneously request connection. This is also undesirable.

Accordingly, it is worthwhile to study whether to introduce a mechanism for collecting the UE assistance information, specifically MBMS counting, from the UE in the idle/inactive state. Needless to say, it is desirable that the UEs in the idle/inactive state be capable of reporting information without transitioning to RRC connected. For example, PRACH resource partitioning associated with the MBS service may be achieved when being introduced to such a report.

Proposal 12: In RAN2, whether the UE assistance information such as MBS counting is also collected from the UE in the idle/inactive state needs to be studied.

## Claims

1. A communication control method performed by a user equipment (100) in a mobile communication system for providing a multicast delivery to the user equipment (100), the communication control method comprising:
receiving, by the user equipment (100) in a Radio Resource Control, RRC, connected state, from a base station (200), an RRC Reconfiguration message comprising an MBS configuration for receiving the multicast delivery;
receiving, by the user equipment (100) in the RRC connected state, from the base station (200), an RRC Release message including predetermined information, wherein the predetermined information indicates whether the MBS configuration is allowed to be continually used in the RRC inactive state;
transitioning, by the user equipment (100), from the RRC connected state to the RRC inactive state, in response to receiving the RRC Release message; and
continually using, without discarding, the MBS configuration received when the user equipment (100) is in the RRC connected state, by the user equipment (100) in the RRC inactive state, based on the information included in the RRC Release message.

2. A chipset for controlling a user equipment (100), the chipset comprising a processor and a memory, the processor configured to
receive, in a Radio Resource Control, RRC, connected state, an RRC Reconfiguration message comprising an MBS configuration for receiving the multicast delivery;
receive, in the RRC connected state, an RRC Release message including predetermined information, wherein the predetermined information indicates whether the MBS configuration is allowed to be continually used in the RRC inactive state;
transition, from the RRC connected state to the RRC inactive state, in response to receiving the RRC Release message; and
continually use, without discarding, the MBS configuration received in the RRC connected state, in the RRC inactive state, based on the information included in the RRC Release message.

3. A user equipment (100) for a multicast delivery in a mobile communication system, the user equipment (100) comprising a chipset according to claim 2.

4. A program for controlling a user equipment (100) configured to
receive, in a Radio Resource Control, RRC, connected state, an RRC Reconfiguration message comprising an MBS configuration for receiving the multicast delivery;
receive, in the RRC connected state, an RRC Release message including predetermined information, wherein the predetermined information indicates whether the MBS configuration is allowed to be continually used in the RRC inactive state;
transition, from the RRC connected state to the RRC inactive state, in response to receiving the RRC Release message; and
continually use, without discarding, the MBS configuration received in the RRC connected state, in the RRC inactive state, based on the information included in the RRC Release message.

5. A system used in a mobile communication system for multicast delivery, comprising a user equipment (100) according to claim 3 and a base station (200).

## Patentansprüche

1. Kommunikationssteuerverfahren, das von einer Benutzereinrichtung (100) in einem Mobilkommunikationssystem ausgeführt wird, zum Bereitstellen einer Multicast-Übertragung an die Benutzereinrichtung (100), wobei das Kommunikationssteuerverfahren aufweist:
Empfangen, durch die Benutzereinrichtung (100) in einem Funkressourcensteuerung-, RRC-, Verbindungszustand, von einer Basisstation (200), einer RRC-Neukonfigurationsnachricht, die eine MBS-Konfiguration zum Empfangen der Multicast-Übertragung aufweist,
Empfangen, durch die Benutzereinrichtung (100) im RRC-Verbindungszustand, von der Basisstation (200), einer RRC-Freigabenachricht, die vorbestimmte Informationen aufweist, wobei die vorbestimmten Informationen angeben, ob die MBS-Konfiguration im RRC-Inaktivzustand fortgesetzt verwendet werden darf,
Übergehen, durch die Benutzereinrichtung (100), aus dem RRC-Verbindungszustand in den RRC-Inaktivzustand als Reaktion auf das Empfangen der RRC-Freigabenachricht, und
fortgesetztes Nutzen, ohne Verwerfen, der MBS-Konfiguration, die empfangen wird, wenn sich die Benutzereinrichtung (100) im RRC-Verbindungszustand befindet, durch die Benutzereinrichtung (100) im RRC-Inaktivzustand, basierend auf den in der RRC-Freigabenachricht enthaltenen Informationen.

2. Chipsatz zum Steuern einer Benutzereinrichtung (100), wobei der Chipsatz einen Prozessor und einen Speicher aufweist, wobei der Prozessor konfiguriert ist, um:
in einem Funkressourcensteuerung-, RRC-, Verbindungszustand eine RRC-Neukonfigurationsnachricht zu empfangen, die eine MBS-Konfiguration zum Empfangen der Multicast-Übertragung aufweist,
im RRC-Verbindungszustand eine RRC-Freigabenachricht zu empfangen, die vorbestimmte Informationen enthält, wobei die vorbestimmten Informationen angeben, ob die MBS-Konfiguration im RRC-Inaktivzustand fortgesetzt verwendet werden darf,
als Reaktion auf das Empfangen der RRC-Freigabenachricht aus dem RRC-Verbindungszustand in den RRC-Inaktivzustand überzugehen und
die im RRC-Verbindungszustand empfangene MBS-Konfiguration im RRC-Inaktivzustand ohne Verwerfen basierend auf den in der RRC-Freigabenachricht enthaltenen Informationen fortgesetzt zu nutzen.

3. Benutzereinrichtung (100) für eine Multicast-Übertragung in einem Mobilkommunikationssystem, wobei die Benutzereinrichtung (100) einen Chipsatz gemäß Anspruch 2 aufweist.

4. Programm zum Steuern einer Benutzereinrichtung (100), die konfiguriert ist, um
in einem Funkressourcensteuerung-, RRC-, Verbindungszustand eine RRC-Neukonfigurationsnachricht zu empfangen, die eine MBS-Konfiguration zum Empfangen der Multicast-Übertragung aufweist,
im RRC-Verbindungszustand eine RRC-Freigabenachricht zu empfangen, die vorbestimmte Informationen enthält, wobei die vorbestimmten Informationen angeben, ob die MBS-Konfiguration im RRC-Inaktivzustand fortgesetzt verwendet werden darf,
als Reaktion auf das Empfangen der RRC-Freigabenachricht aus dem RRC-Verbindungszustand in den RRC-Inaktivzustand überzugehen, und
die im RRC-Verbindungszustand empfangene MBS-Konfiguration im RRC-Inaktivzustand ohne Verwerfen basierend auf den in der RRC-Freigabenachricht enthaltenen Informationen fortgesetzt zu nutzen.

5. System, das in einem Mobilkommunikationssystem für die Multicast-Übertragung verwendet wird, aufweisend eine Benutzereinrichtung (100) gemäß Anspruch 3 und eine Basisstation (200).

## Revendications

1. Procédé de commande de communication mis en œuvre par un équipement utilisateur (100) dans un système de communication mobile afin de fournir une diffusion multicast à l'équipement utilisateur (100), le procédé de commande de communication comprenant :
la réception, par l'équipement utilisateur (100) dans un état connecté de contrôle de ressources radio, RRC, d'un message de reconfiguration RRC en provenance d'une station de base (200), comprenant une configuration MBS pour la réception de la diffusion multicast ;
la réception, par l'équipement utilisateur (100) dans l'état connecté RRC, en provenance de la station de base (200), d'un message de libération RRC comprenant des informations prédéterminées, dans lequel lesdites informations prédéterminées indiquent si la configuration MBS peut continuer à être utilisée dans l'état inactif RRC ;
le passage, par l'équipement utilisateur (100), de l'état connecté RRC à l'état inactif RRC, en réponse à la réception du message de libération RRC ; et
l'utilisation en continu, sans la rejeter, de la configuration MBS reçue lorsque l'équipement utilisateur (100) se trouve dans l'état connecté RRC par l'équipement utilisateur (100) dans l'état inactif RRC, sur la base des informations incluses dans le message de libération RRC.

2. Jeu de puces destiné à commander un équipement utilisateur (100), le jeu de puces comprenant un processeur et une mémoire, le processeur étant configuré pour
recevoir, dans un état connecté de contrôle de ressources radio, RRC, un message de reconfiguration RRC comprenant une configuration MBS pour la réception de la diffusion multicast ;
recevoir, dans l'état connecté RRC, un message de libération RRC comprenant des informations prédéterminées, dans lequel les informations prédéterminées indiquent si la configuration MBS peut continuer à être utilisée dans l'état inactif RRC ;
passer de l'état connecté RRC à l'état inactif RRC, en réponse à la réception du message de libération RRC ; et
utiliser en continu, sans la rejeter, la configuration MBS reçue dans l'état connecté RRC dans l'état inactif RRC, sur la base des informations incluses dans le message de libération RRC.

3. Équipement utilisateur (100) destiné à une diffusion multicast dans un système de communication mobile, l'équipement utilisateur (100) comprenant un jeu de puces selon la revendication 2.

4. Programme destiné à commander un équipement utilisateur (100) configuré pour
recevoir, dans un état connecté de contrôle de ressources radio, RRC, un message de reconfiguration RRC comprenant une configuration MBS pour la réception de la diffusion multicast ;
recevoir, dans l'état connecté RRC, un message de libération RRC comprenant des informations prédéterminées, dans lequel les informations prédéterminées indiquent si la configuration MBS peut continuer à être utilisée dans l'état inactif RRC ;
passer de l'état connecté RRC à l'état inactif RRC, en réponse à la réception du message de libération RRC ; et
utiliser en continu, sans la rejeter, la configuration MBS reçue dans l'état connecté RRC dans l'état inactif RRC, sur la base des informations incluses dans le message de libération RRC.

5. Système utilisé dans un système de communication mobile pour la diffusion multicast, comprenant un équipement utilisateur (100) selon la revendication 3 et une station de base (200).
